Europäisches Patentamt

European Patent Office

Office européen des brevets

(19)

(11) Veröffentlichungsnummer : **0 123 721**
**B1**

(12) **EUROPÄISCHE PATENTSCHRIFT**

(45) Veröffentlichungstag der Patentschrift :
16.04.86

(51) Int. Cl.⁴ : **B 01 D 46/04**

(21) Anmeldenummer : **83109588.0**

(22) Anmeldetag : **27.09.83**

(54) Schlauchfiltervorrichtung mit Druckluftabreinigung.

(30) Priorität : **29.04.83 DE 8312704 U**

(43) Veröffentlichungstag der Anmeldung :
**07.11.84 Patentblatt 84/45**

(45) Bekanntmachung des Hinweises auf die Patenterteilung : **16.04.86 Patentblatt 86/16**

(84) Benannte Vertragsstaaten :
**AT BE CH DE FR GB IT LI LU NL SE**

(56) Entgegenhaltungen :
**US-A- 3 844 750**
**US-A- 3 997 305**

(73) Patentinhaber : **VENTILATORENFABRIK OELDE GMBH**
**Robert-Schumann-Ring**
**D-4740 Oelde (DE)**

(72) Erfinder : **Kreft, Rolf Heinz**
**Alleestrasse 11**
**D-4720 Beckum (DE)**

(74) Vertreter : **Stracke, Alexander, Dipl.-Ing. et al**
**Patentanwälte Dipl.-Ing. Loesenbeck Dipl.-Ing.**
**Stracke Jöllenbecker Strasse 164 Postfach 5605**
**D-4800 Bielefeld 1 (DE)**

## Beschreibung

Die vorliegende Neuerung bezieht sich auf eine Schlauchfiltervorrichtung mit Druckluftabreinigung mit einer Schlauchaufnahmeplatte, in deren Einbauöffnungen jeweils ein Schlauchfilter befestigt ist, wobei in jedem Schlauchfilter ein Stützkorb vorgesehen ist, dessen oberer Rand federnd ausgebildet ist und den in diesem Bereich mit einer Wulst versehenen Schlauchfilter im Laibungsbereich der Einbauöffnung festklemmt.

Schlauchfiltervorrichtungen der gattungsgemäßen Art sind an sich bekannt.

Durch die Stützkörbe werden die Schlauchfilter radial gespannt. Bislang ist es allerdings noch nicht möglich, die Schlauchfilter auch in axialer Richtung zu spannen.

Der vorliegenden Neuerung liegt die Aufgabe zugrunde, eine Schlauchfiltervorrichtung der gattungsgemäßen Art so zu gestalten, daß auf einfache Art und Weise eine axiale Spannung der Schlauchfilter ermöglicht wird.

Diese Aufgabe wird neuerungsgemäß dadurch gelöst, daß in das obere Ende des Schlauchfilters ein Filtertopfdeckel hineinragt, der auf der Oberseite der Schlauchaufnahmeplatte befestigt ist und einen in den Stützkorb hineinragenden Ansatz aufweist, der von dem oberen, radial geteilten Ring des Stützkorbes umgriffen ist und in seiner Längserstreckung an seiner Außenseite Rastmittel aufweist, zwischen denen der obere Ring des Stützkorbes festlegbar ist.

Durch die Gestaltung des Filtertopfdeckels mit Rastungen im Bereich seines in den Stützkorb hineinragenden Ansatzes wird auf einfache Art und Weise die Möglichkeit eröffnet, das Schlauchfilter auch in axialer Richtung zu spannen, da die Möglichkeit geschaffen ist, den oberen, geteilten Ring des Stützkorbes in Längsrichtung des Ansatzes des Filtertopfdeckels zu verschieben und in unterschiedlichen Rastungen festzusetzen.

Weitere Merkmale der Neuerung sind Gegenstand von Unteransprüchen.

In den beigefügten Zeichnungen sind Ausführungsbeispiele der Neuerung dargestellt, die im folgenden näher beschrieben werden.

Es zeigen :

Figur 1 eine schematische Ansicht einer Schlauchfiltervorrichtung gemäß vorliegender Neuerung,

Figur 2 einen Vertikalschnitt durch ein Schlauchfilter im Bereich seiner Befestigung,

Figur 3 einen der Fig. 2 entsprechenden Schnitt nach einem weiteren Ausführungsbeispiel der Neuerung,

Figur 4 eine Teilansicht in Richtung des Pfeiles IV in Fig. 2.

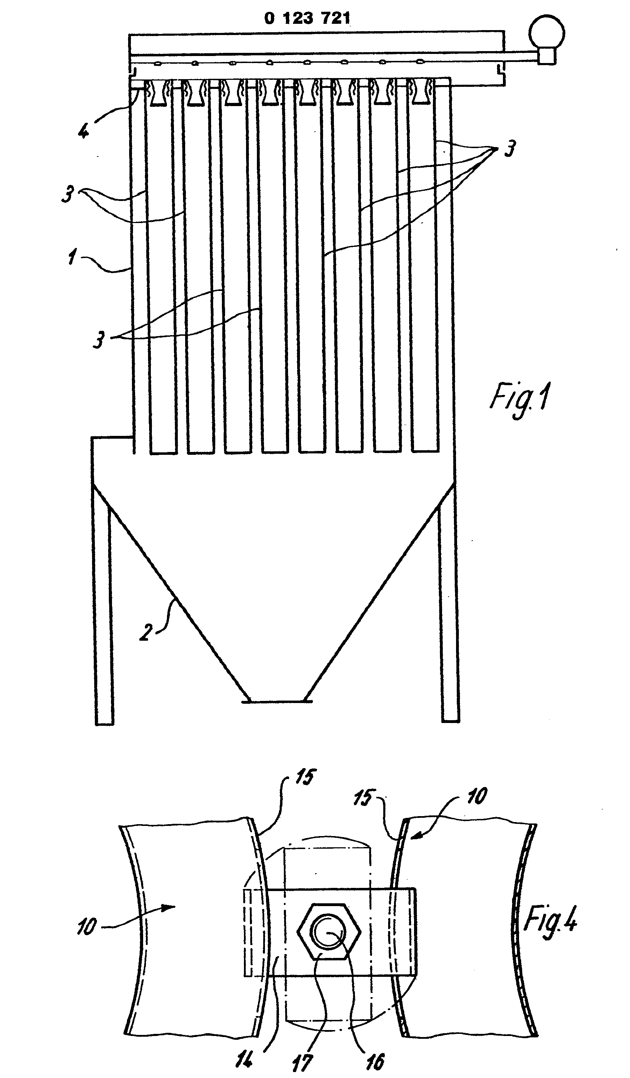

Die in Fig. 1 dargestellte Schlauchfiltervorrichtung besteht im wesentlichen aus einem Gehäuse 1, einem darunter angeordneten Trichter 2 und einer Vielzahl innerhalb des Gehäuses 1 angeordneten Schlauchfiltern 3.

Die Schlauchfilter 3 sind in einer Schlauchaufnahmeplatte 4 gelagert.

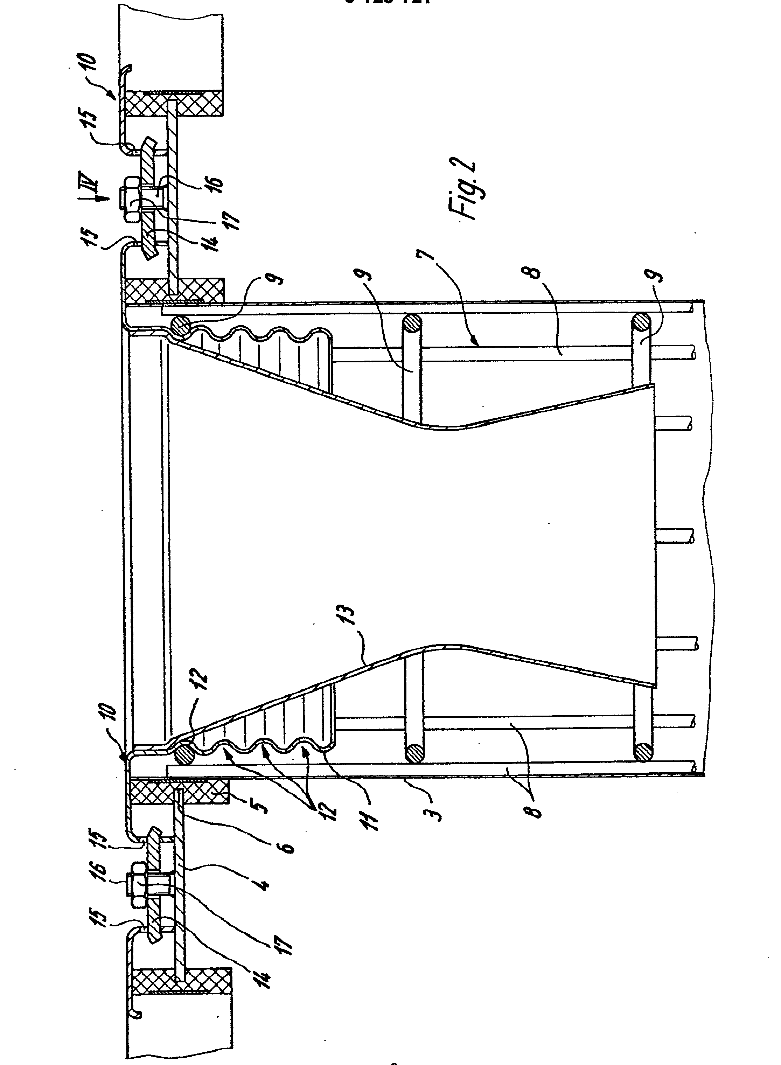

Die Fig. 2 zeigt, daß ein Schlauchfilter 3 in seinem oberen Endbereich mit einer Wulst 5 aus einem elastischen Material versehen und in eine Einbauöffnung 6 der Schlauchaufnahmeplatte eingeklemmt ist.

Im Schlauchfilter 3 ist ein Stützkorb 7 angeordnet, der aus vertikalen Stäben 8 und mehreren Ringen 9 besteht.

Der obere Ring 9 des Stützkorbes 7 ist radial geteilt, so daß das obere Ende des Stützkorbes 7 zusammengedrückt werden kann.

Auf der Oberseite der Schlauchaufnahmeplatte 4 ist ein Filtertopfdeckel 10 befestigt, der einen in den Schlauchfilter 3 und in den Stützkorb 7 hineinragenden Ansatz 11 aufweist.

Der Ansatz 11 ist mit mehreren, jeweils einen Abstand zueinander aufweisenden, umlaufenden Rillen 12 ausgestattet. In eine dieser Rillen 12 greift der obere Ring 9 des Stützkorbes 7 kraftschlüssig ein. Eine axiale Verschiebung des Stützkorbes 7 ist dadurch verhindert.

Soll nun der Stützkorb 7 zur Spannung des Schlauchfilters 3 tiefer in den Schlauchfilter 3 hineingeschoben werden, so geschieht dies nach Lösen der Befestigung des Filtertopfdeckels 10, Herausziehen des Filtertopfdeckels 10 aus der Schlauchaufnahmeöffnung 6 so weit, daß der Stützkorb 7 zugänglich wird, und nun kann der obere Ring 9 in eine tiefer liegende Rille 12 eingeschnäppt werden. Nunmehr wird der Filtertopfdeckel 10 wieder auf der Schlauchaufnahmeplatte 4 befestigt, da der obere Ring 9 um eine Rille 12 weiter nach unten bewegt worden ist, ist auch das untere Ende des Stützkorbes um den gleichen Betrag nach unten verschoben, so daß der Schlauchfilter 3 nunmehr in axialer Richtung gespannt ist. Sollte es erforderlich sein, den Stützkorb 7 zur axialen Spannung des Schlauchfilters 3 erneut axial zu verschieben, so wird der vorstehend beschriebene Vorgang wiederholt.

In Abweichung von dem in Fig. 2 dargestellten Ausführungsbeispiel ist es auch möglich, den Ansatz 11 des Filtertopfdeckels 10 mit anders gestalteten Rastmitteln zu versehen, die sich an der Außenseite des Ansatzes 11 und in dessen Längserstreckung befinden. So könnte beispielsweise der Ansatz 11 zylindrisch ausgebildet sein und mit mehreren, in Längserstreckung des Ansatzes 11 jeweils in einem Abstand zueinander angeordneten Halteringen versehen sein, zwischen denen der obere Ring 9 des Stützkorbes 7 in axialer Richtung festlegbar ist. Es könnten auch am Ansatz 11 am Umfang verteilte Halteklammern od. dgl. vorgesehen sein, um den oberen Ring 9 am Ansatz 11 in verschiedenen Stellungen kraftschlüssig festzulegen.

Beim Ausführungsbeispiel gemäß Fig. 2 ist mit dem Filtertopfdeckel 10 eine Luftdüse 13 fest verbunden, durch die zum Zwecke der Druckluftabreinigung des Schlauchfilters 3 Druckluft hindurchgeführt werden kann.

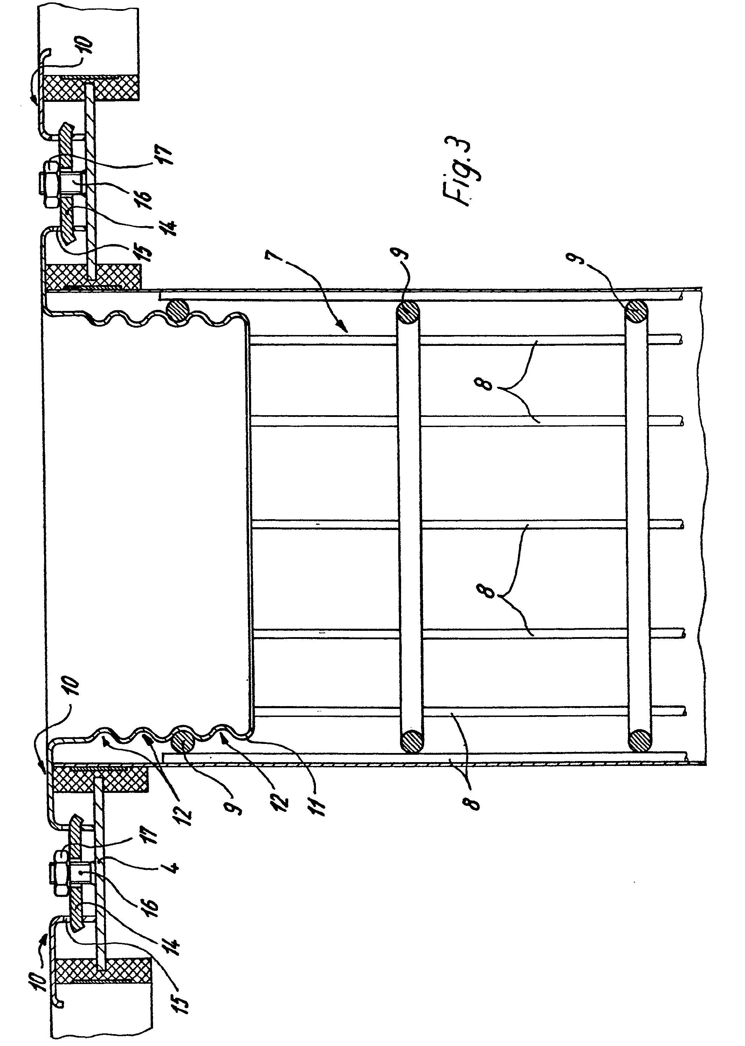

Beim Ausführungsbeispiel gemäß Fig. 3 ist auf die Verbindung der Luftdüse mit dem Filtertopfdeckel 10 verzichtet worden. Es ist möglich, eine Luftdüse anderweitig in den Bereich der oberen Öffnung des Schlauchfilters 3 einzuführen.

Die Befestigung des Filtertopfdeckels 10 an der Schlauchaufnahmeplatte 4 erfolgt durch Klemmstücke 14. Diese Klemmstücke 14 greifen jeweils in Ausnehmungen 15 zweier gegenüberliegender Filtertopfdeckel 10 und werden von einer auf eine Schraube 16 aufgeschraubten Mutter 17 gespannt. Die Ausnehmungen 15 sind so groß ausgeführt, daß das Klemmstück 14 nach Lösen der Mutter 17 um die Achse der Schraube 16 aus den Ausnehmungen 15 herausgeschwenkt werden kann, wie dies in Fig. 4 anschaulich gezeigt ist.

Dadurch wird ein leichtes Lösen oder Befestigen der Filtertopfdeckel 10 gewährleistet.

Bezugszeichenliste

| | |
|---|---|
| 1 | Gehäuse |
| 2 | Trichter |
| 3 | Schlauchfilter |
| 4 | Schlauchaufnahmeplatte |
| 5 | Wulst |
| 6 | Einbauöffnung |
| 7 | Stützkorb |
| 8 | Stäbe |
| 9 | Ringe |
| 10 | Filtertopfdeckel |
| 11 | Ansatz |
| 12 | Rillen |
| 13 | Luftdüse |
| 14 | Klemmstück |
| 15 | Ausnehmungen |
| 16 | Schraube |
| 17 | Mutter |

## Patentansprüche

1. Schlauchfiltervorrichtung mit Druckluftabreinigung mit einer Schlauchaufnahmeplatte, in deren Einbauöffnungen jeweils ein Schlauchfilter befestigt ist, wobei in jedem Schlauchfilter ein Stützkorb vorgesehen ist, dessen oberer Rand federnd ausgebildet ist und den in diesem Bereich mit einer Wulst versehenen Schlauchfilter im Laibungsbereich der Einbauöffnung festklemmt, dadurch gekennzeichnet, daß in das obere Ende jedes Schlauchfilters (3) ein Filtertopfdeckel (10) hineinragt, der auf der Oberseite der Schlauchaufnahmeplatte (4) befestigt ist und einen in den Stützkorb (7) hineinragenden Ansatz (11) aufweist, der von dem oberen, radial geteilten Ring (9) des Stützkorbes (7) umgriffen ist und in seiner Längserstreckung an seiner Außenseite Rastmittel aufweist, zwischen denen der obere Ring (9) des Stützkorbes (7) festlegbar ist.

2. Schlauchfiltervorrichtung nach Anspruch 1, dadurch gekennzeichnet, daß die Rastmittel aus mehreren, einen Abstand zueinander aufweisenden, umlaufenden Rillen (12) bestehen.

3. Schlauchfiltervorrichtung nach Anspruch 1 oder 2, dadurch gekennzeichnet, daß mit dem Filtertopfdeckel (10) eine Luftdüse (13) fest verbunden ist.

## Claims

1. A bag filter apparatus with compressed air cleaning, comprising a bag mounting plate having fitting openings in each of which a respective bag filter is fixed, wherein provided in each bag filter is a support cage whose upper edge is of a resilient nature and fixedly clamps the bag filter which in that region is provided with a bead portion, in position in the region of the inner surface of the fitting opening, characterised in that a filter cup-like cover (10) extends into the upper end of each bag filter (3), which cover (10) is fixed on the top side of the bag mounting plate (4) and has a projection portion (11), which projection portion extends into the support cage (7) and is embraced by the upper, radially divided ring (9) of the support cage (7) and is provided in its longitudinal direction on the outside thereof with retaining means between which the upper ring (9) of the support cage (7) can be fixed.

2. A bag filter apparatus according to claim 1 characterised in that the retaining means comprise a plurality of peripheral grooves (12) which are disposed at a spacing from each other.

3. A bag filter apparatus according to claim 1 or claim 2 characterised in that an air nozzle (13) is fixedly connected to the filter cup-like cover (10).

## Revendications

1. Ensemble de filtres à manche à dépoussiérage par air comprimé, avec une plaque réceptrice de manches dans chacune des ouvertures d'encastrement de laquelle est fixé un filtre à manche, une cage de support étant disposée dans chaque filtre à manche, cage dont le bord supérieur est conçu élastiquement et bloque sur la surface intérieure de l'ouverture d'encastrement le filtre à manche qui est sans cette zone doté d'un bourrelet, caractérisé en ce qu'un couvercle de filtre en cuvette (10) rentre dans l'extrémité supérieure de chaque filtre à manche (3), couvercle qui est fixé sur le côté supérieur de la plaque réceptrice (4) des manches, et qui présente un appendice (11) qui rentre dans la cage de support (7) et qui est entouré par l'anneau supérieur (9) radialement fendu de la cage de support (7), et qui présente également, sur son côté extérieur et dans le sens longitudinal, des moyens d'encliquetage entre lesquels peut être fixé l'anneau supérieur (9) de la cage de support (7).

2. Ensemble de filtres à manche selon la revendication 1, caractérisé en ce que les moyens d'encliquetage sont constitués par plusieurs gorges circulaires (12) distantes les unes des autres.

3. Ensemble de filtres à manche selon la revendication 1 ou 2, caractérisé en ce qu'une buse d'air (13) est assemblée rigidement au couvercle de filtre en cuvette (10).

0 123 721

Fig.1

Fig.4

Fig. 2

0 123 721

Fig. 3

0 123 721